# EUROPEAN PATENT APPLICATION

(11) **EP 3 384 751 A1**
(43) Date of publication of application: **10.10.2018**
(21) Application number: 17164512.0
(22) Date of filing: 03.04.2017
(51) Int. Cl.: A01D 33/08, A23N 12/02

(54) **CLEANING CROPS VEHICLE AND METHOD OF THE SAME**

(71) Applicant: Deprez Construct NV, 8610 Kortemark (BE)
(72) Inventor: Deprez, Johan, 8680 Koekelare (BE)
(74) Representative: IP HILLS NV

(57) **Abstract**

According to an embodiment the invention relates to a vehicle (110) suitable for operating next to a harvesting machine (100), the vehicle (110) comprising a first receptacle (111) suitable to receive crops (102) delivered by the harvesting machine (100) through a delivering conveyor (101) while the vehicle (110) is driving alongside the harvesting machine (100) during a harvesting operation and a cleaning device (113) adapted to receive the received crops (102) of the first receptacle (111) and automatically separate the received crops (102) in excess materials (121) and cleaned crops (120) characterized in that the vehicle is operated such that the excess materials (121) of the cleaning device (113) are scattered on the agricultural field (300) while the vehicle (110) is driving along the agricultural field (300) and in that the vehicle (110) further comprises a second receptacle (115) adapted to buffer the cleaned crops (120).

## Description

### Field of the Invention

The present invention generally relates to a post-harvesting cleaning device and crops transfer.

### Background of the Invention

Harvesting machines are used to harvest crops, such as potatoes, carrots and onions, from an agricultural field in an automated or semi-automated way. When these crops are harvested they mostly contain excess materials such as adhered particles like clod and/or haulm. Furthermore a harvesting machine may also gather other excess material from the agricultural field while harvesting like for example stones. In order to meet quality requirements the excess materials need to be removed from the crops.

In order to do so the crops may first be stored in a receptacle from the harvesting machine and later on be cleaned, i.e. removing the excess materials, in a cleaning device suitable for cleaning crops.

An example of such a cleaning device is disclosed in patent application US2015/0014226. A harvesting machine transfers his harvested crops including the excess materials to the cleaning device which receives them, next cleans the crops and subsequently conveys the cleaned crops outside the cleaning device.

Another example is disclosed in patent application GB630812 wherein a cleaning device receives crops from a harvesting machine, cleans the crops and subsequently conveys the cleaned crops into a receptacle from the harvesting machine.

There are some drawbacks related to embodiments of such cleaning devices known from the prior art. The cleaning device disclosed in US2015/0014226 and GB630812 may either be transported to a spot where the crops are collected or the harvesting machine may be moved to the cleaning device in order to initiate the cleaning process. In both cases however the removed excess materials are accumulated on the spot where the cleaning device is operating.

Another drawback is that cleaning crops is also time consuming in the sense that it hampers the operation time of the harvesting machine. As for the cleaning device disclosed in GB630812 the harvesting machine has to interrupt his operation, conveys the crops to the cleaning device and receives the cleaned crops in a receiving receptacle. When this receiving receptacle is fully loaded the cleaned crops needs to be transferred to another container.

It is therefore an objective of the present invention to alleviate the above drawbacks and to provide an improved solution for cleaning crops received from a harvesting machine.

### Summary of the Invention

This objective is achieved, in a first aspect, by a vehicle suitable for driving on a public road and on an agricultural field, and further suitable for operating next to a harvesting machine, the vehicle comprising a first receptacle suitable to receive crops delivered by the harvesting machine through a delivering conveyor of the harvesting machine while the vehicle is driving alongside the harvesting machine during a harvesting operation; and a cleaning device adapted to receive the received crops of the first receptacle; and automatically separate the received crops in excess materials and cleaned crops; characterized in that the vehicle is operated such that the excess materials of the cleaning device are scattered on the agricultural field while the vehicle is driving along the agricultural field, and in that the vehicle further comprises a second receptacle adapted to buffer the cleaned crops of the cleaning device.

Thus the cleaning device is integrated in a vehicle suitable for driving on a public road and on an agricultural field. This allows an operator to quickly move to different fields if they are located on distinct places separated by public roads. Furthermore the vehicle is also suitable for operating next to a harvesting machine meaning inter alia that its pace may be adapted to that of the harvesting machine.

The vehicle comprises a first receptacle wherein crops of a harvesting machine are collected. This is done through the use of a delivering conveyor of the harvesting machine while the vehicle is driving alongside the harvesting machine during a harvesting operation. The harvesting machine is thus, for example, harvesting potatoes, carrots or onions. The crops are received from a reduced drop height such they are not damaged. For potatoes, this drop height is for example lower than 40cm. Next these received crops are conveyed to a cleaning device. In the cleaning device the received crops are automatically separated into excess materials and cleaned crops. Excess materials comprises for example haulm, soil and/or clod and may further comprise stones or even garbage disposed on the agricultural field. Thus cleaned crops are obtained and subsequently conveyed to a second receptacle wherein the cleaned crops are buffered. In this way the vehicle may continue its cleaning operation until this second receptacle is fully loaded. While the vehicle is driving along the agricultural field the excess materials are immediately scattered on this field.

Different advantages are identified compared to cleaning devices known from the prior art.

Firstly, since the vehicle is adapted to operate next to a harvesting machine the harvesting operation continues while the vehicle drives next to it. While crops are harvested they may immediately be conveyed to the vehicle which instantaneously initiates the cleaning process. Both operations, namely harvesting by the harvesting machine and cleaning by the vehicle may thus be performed simultaneously.

Secondly, since the excess materials are removed while operating on the agricultural field and next scattered on it there is no accumulation of materials on one spot. Another advantage is that the vehicle comprises a net weight of crops which reduces soil damage caused by heavy vehicles. Additionally a net weight is beneficial for the vehicle's energy consumption and also allows to use the second receptacle in an efficient way. This makes the transportation costs lower.

According to an embodiment, the vehicle is further configured to scatter the excess materials while the vehicle is driving along the agricultural field next to the harvesting machine during a harvesting operation.

Thus, in a first scenario the excess materials are scattered on a piece of land next to that where the harvesting machine is harvesting on. An advantage is thus that clod separated from the crops is returned on the soil in approximately the same location from which it was withdrawn.

According to an embodiment, the vehicle is further configured to scatter the excess materials while the vehicle is travelling on the agricultural field from the harvesting machine towards a stationary dumping location.

In a second scenario the excess materials are scattered on the piece of land between the harvesting machine and the stationary dumping location. Prior to the complete filling of the second receptacle of the vehicle, an operator may already decide to return to the stationary dumping location and proceeding the cleaning process. At the same time, a harvesting machine may continue its harvesting operation and buffer received crops in a buffer receptacle until the vehicle returns. In this way both and harvesting is performed in a time efficient way.

According to an embodiment, the vehicle is further configured to scatter the excess materials while the vehicle is travelling on the agricultural field from a stationary dumping location towards the harvesting machine.

Obviously, the excess materials may be scattered when the vehicle in travelling in the opposite direction, namely from the stationary dumping location towards the harvesting machine. This may for example be the case when the cleaned crops are unloaded but the vehicle still comprises excess materials. In this way no time is wasted and the vehicle may immediately return to the harvesting machine.

According to an embodiment, the vehicle is further configured to buffer the excess materials when the vehicle is stationary at a stationary dumping location during a dumping operation.

When the vehicle is unloading cleaned crops, the excess materials are buffered. In this way there will be no accumulation of disposed excess materials on the dumping location.

According to an embodiment, the vehicle further comprises a distribution conveyor pivotally and/or telescopically mounted such that the cleaned crops received from the cleaning device may be uniformly distributed in the second receptacle with limited drop height; and/or a discharging conveyor adapted to convey the cleaned crops from the second receptacle to a storage and/or transport receptacle.

The distribution conveyor receives the cleaned crops from the cleaning device. Since it is pivotally and/or telescopically mounted, it distributes the cleaned crops in the second receptacle depending on the amount of cleaned crops that are already present. The distribution conveyor elongates to drop cleaned crops at the end of the receptacle and pivots upwards when there is already a layer of crops on the floor of the receptacle. In this way the second receptacle is used in an efficient way.

When the vehicle unloads the cleaned crops of the second receptacle, the discharging conveyor is used. Therefore, the cleaned crops aren't dropped on the soil or no external conveyor is needed. The advantage is that they are transferred in a fast way to another external storage and/or transport receptacle.

Since only cleaned crops are transferred to the external storage and/or transport receptacle, this transfer is performed in a faster way compared to the transfer of received crops and thus the vehicle may quickly return towards the harvesting machine.

According to an embodiment, the cleaning device is further configured to extract stones from the excess materials; and/or to extract ferromagnetic materials from the excess materials.

The excess materials not only comprise haulm, soil and/or clod but may further comprise stones and/or ferromagnetic materials. Since it is not preferable to scatter stones and/or ferromagnetic materials on the agricultural field back again they are extracted from the excess materials. That way materials that downgrade an agricultural field are removed. The stones and/or ferromagnetic materials may for example be stored in a separate receptacle.

According to an embodiment, the vehicle further comprises a transmitting conveyor configured to transmit the received crops from the first receptacle to the cleaning device and a driver's cabin movable mounted on one or two arms such that the driver's cabin may be lifted; and wherein the first receptacle is mounted on the transmitting conveyor; and wherein the transmitting conveyor is movable mounted on the vehicle such that it may be moved under or along the driver's cabin when the driver's cabin is lifted.

The vehicle is suitable to drive on a public road thus in general the driver's cabin is located at the front of it. By movably mounting the driver's cabin on the vehicle it may be lifted such that an operator has an overview of the cleaning operation. Additionally the first receptacle is mounted on the transmitting conveyor. The transmitting conveyor with the mounted first receptacle moves along or under the driver's cabin towards the front of the vehicle when the driver's cabin is lifted. A first advantage is that the transmitting conveyor accelerates the transmitting of the received crops from the first receptacle towards the cleaning device. A second advantage is that by lifting the driver's cabin an operator may immediately observes if something goes wrong in the operation and/or if one of the receptacle is fully loaded. The cabin may in this case be lifted higher than the height allowed for vehicles suitable to drive on a public road.

According to an embodiment, the vehicle further comprises a shovel unit suitable to shovel crops, wherein the shovel unit is configured to transmit the shovelled crops to the first receptacle.

The vehicle may also shovel crops instead of receiving them from a harvesting machine. Crops are, for example, dropped at a dumping location, such as in a silo or on a field. The vehicle shovels the crops by use of the shovel unit. The shovel unit may comprise, for example, a telescopic handler and a transporting conveyor or may comprise a single shovel. The single shovel or the telescopic handler combined with the transporting conveyor shovels the crops and drops them in the first receptacle. Then, these crops are cleaned in the same manner as when the crops are received by use of a delivering conveyor of a harvesting machine.

This way, the vehicle does not depend on a harvesting machine or another machine in order to receive crops. The vehicle may thus operate independently on a dumping location. Next, since the shovel unit is mounted on the vehicle, the drop height from the shovel unit to the first receptacle may be reduced. This is advantageous since a high drop height damages crops.

Another advantage is that the vehicle may also operate outside the harvest time which depends on the type of crop that is harvested. If crops are already harvested and dumped, the vehicle is used to clean the crops and immediately load the cleaned crops in the second receptacle. This way, the charging time of a truck is considerably reduced since the vehicle may overload the cleaned crops from the second receptacle in a short time to the truck.

According to an aspect of the invention, the first receptacle is replaced by the shovel unit.

Instead of charging the first receptacle, the shovel unit may also immediately transport the crops to the cleaning device. This way the cleaning process is initiated in a faster way.

According to an embodiment, the weight handling capacity of the first receptacle relative to the weight handling capacity of the second receptacle is in the range of 10% to 35%, preferably 15% to 25%, more preferably 20%.

The second receptacle is thus greater than the capacity of the first receptacle. By limiting the capacity of the first receptacle compared to that of the second one the vehicle may operate in an efficient way since the vehicle only has to interrupt its operation when the second receptacle is fully loaded.

The capacity of the second receptacle has, for example, a capacity of approximately 25000kg yielding a capacity of the first receptacle of approximately 5000kg.

According to an embodiment, the width of the vehicle is in the range of approximately 2m to 3m, more preferably in the range of 2.3m and 2.5m, most preferably approximately 2.4m, and wherein the length of the vehicle is approximately 15m.

In that way the vehicle is suitable to drive on the public road and on an agricultural field.

According to a second aspect the invention relates to a method for operating the vehicle according to the first aspect of the invention, the method comprising the steps of receiving crops from a harvesting machine while driving alongside the harvesting machine during a harvesting operation on an agricultural field; and separating the received crops in excess materials and cleaned crops; characterized in that the excess materials are scattered on the agricultural field while driving along the agricultural field and the cleaned crops are buffered.

In other words, the method comprises receiving crops from a harvesting machine during a harvesting operation. This is done while driving along the harvesting machine. Next, the received crops are separated into excess materials and cleaned crops, wherein the excess materials are scatted on the agricultural field and the cleaned crops are buffered.

An advantage of the method is that harvesting may simultaneously be performed while excess materials is separated from received crops. In this way harvesting and cleaning crops doesn't need to be performed in sequences.

According to an embodiment, the excess materials are scattered while driving along the agricultural field next to the harvesting machine during a harvesting operation.

In this way the excess materials such as for example clod is returned on the soil in approximately the same location from which it was withdrawn.

According to an embodiment, the excess materials are scattered while travelling on the agricultural field from the harvesting machine towards a stationary dumping location.

The separation process thus continues even if there is an interruption of receiving crops, for example while turning on the field or while driving to a stationary dumping location.

According to an embodiment, the excess materials are scattered while travelling on the agricultural field from a stationary dumping location towards the harvesting machine.

When travelling in the opposite direction the scattering may also continue through which no time is wasted on a stationary dumping location.

According to an embodiment, the excess materials are buffered when being stationary at a stationary dumping location.

When cleaned crops are unloaded at a station dumping location, the excess materials are buffered such that no accumulation is generated of excess materials at that spot.

### Brief Description of the Drawings

Fig. 1 schematically illustrates a vehicle suitable for cleaning crops received from a harvesting machine; and
Fig. 2 illustrates a vehicle according to an embodiment of the invention driving on a public road; and
Fig. 3 illustrates a vehicle according to an embodiment of the invention driving on an agricultural field; and
Fig. 4 illustrates a vehicle according to an embodiment of the invention comprising cleaned crops in the second receptacle; and
Fig. 5 illustrates a vehicle according to an embodiment of the invention unloading cleaned crops in a container; and

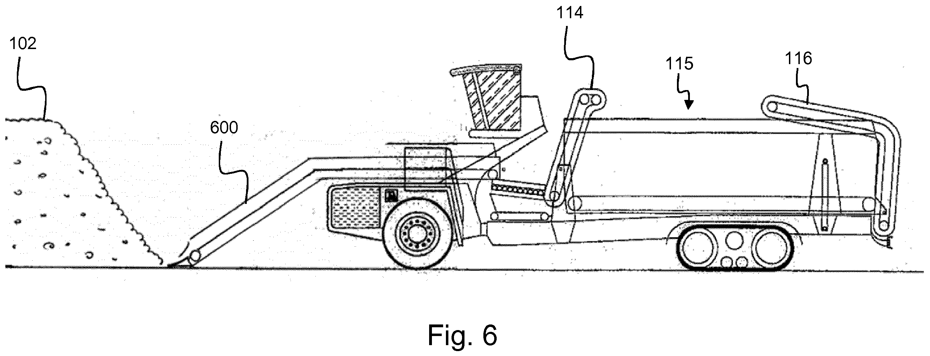

Fig. 6 illustrates a vehicle according to an embodiment of the invention comprising a shovel unit.

### Detailed Description of Embodiment(s)

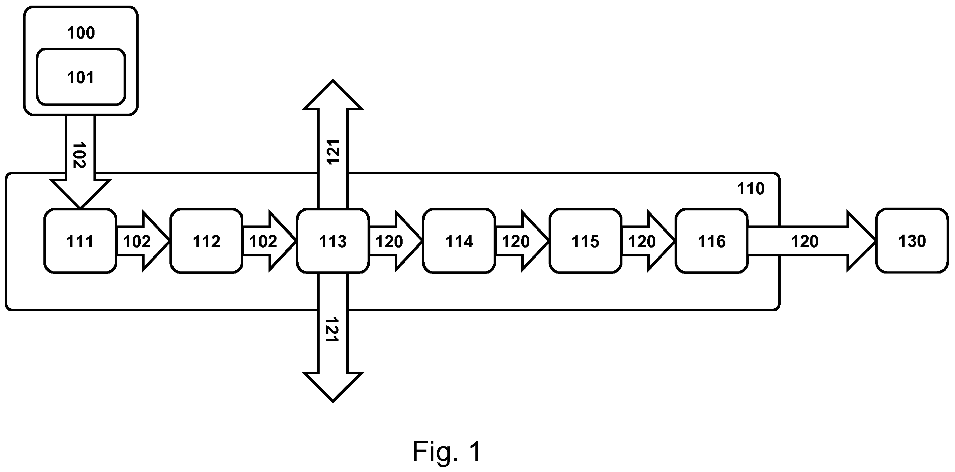

Fig. 1 shows schematically a harvesting machine 100 and a vehicle 110 for cleaning received crops 102 from the harvesting machine 100. The harvesting machine 100 harvest crops on an agricultural field. These crops are delivered through a delivering conveyor 101 from the harvesting machine 100 to the vehicle 110. The received crops 102 are first collected in a first receptacle 111. According to an embodiment, the received crops are next conveyed through a transmitting conveyor 112 to a cleaning device 113. In the cleaning device 113 the received crops 102 are separated into cleaned crops 120 and excess materials 121. The excess materials 121 are scattered on the agricultural field. The cleaned crops 120 are conveyed by the use of a distribution conveyor 114 to a second receptacle 115. Finally, the cleaned crops 120 are discharged from the vehicle 110 through a discharging conveyor 116 to an external container 130.

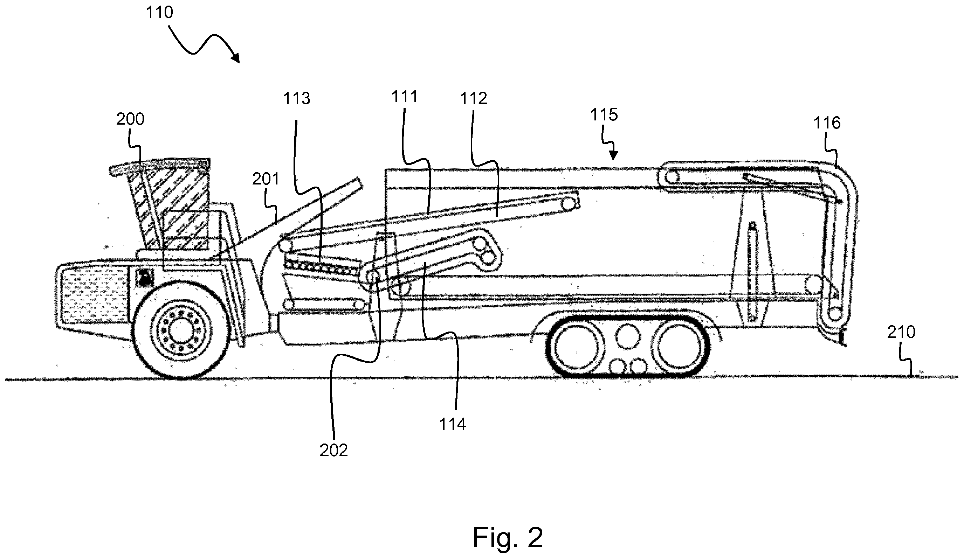

Fig. 2 illustrates the vehicle 110 for cleaning crops. The vehicle 110 is located on a public road 210. The vehicle 110 comprises the first receptacle 111, the transmitting conveyor 112, the cleaning device 113, the distribution conveyor 114, the second receptacle 115 and the discharging conveyor 116. The vehicle 110 further comprises a driver's cabin 200 and an arm 201 mounted on the vehicle 110. When the vehicle 110 drives on the public road 210, the driver's cabin 200 is located at the front of the vehicle 110 and the first receptacle 110 and the transmitting conveyor 112 are located behind the driver's cabin 200. In this configuration a driver in the driver's cabin 200 has thus a good view of the public road while driving and the height of the vehicle is limited such that the vehicle is also suitable to drive on the public road 210 since the driver's cabin 200 is positioned in a low setting.

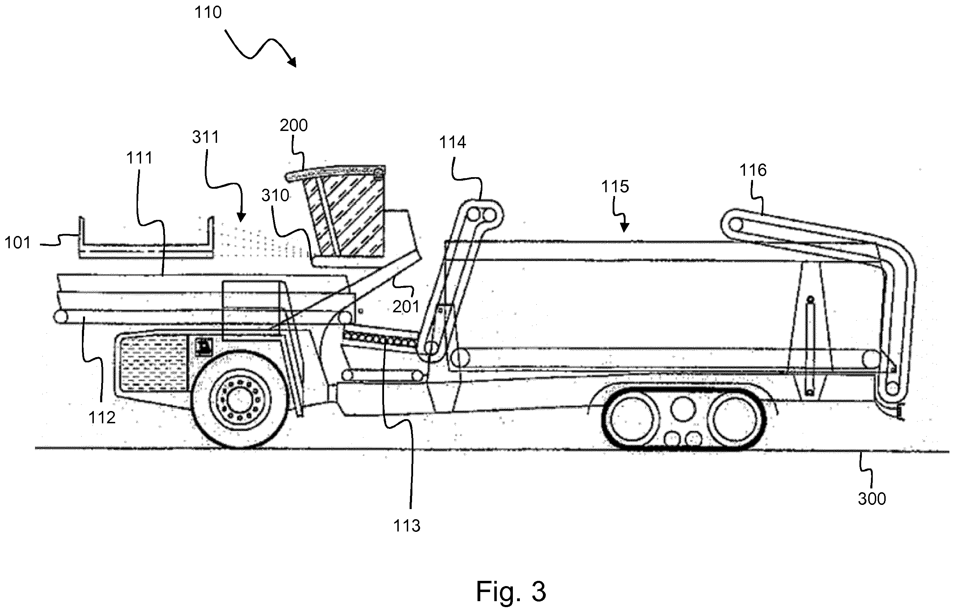

The vehicle 110 is also suitable to drive on an agricultural field 300. Fig. 3 illustrates such an embodiment. First, the driver's cabin 200 is lifted on the arm 201 such that it is positioned higher than the first receptacle 111. Next, the first receptacle 111 and the transmitting conveyor 112 are moved under or next to the driver's cabin 200 such that they are located at the front of the vehicle 110. In this configuration a driver in the driver's cabin 200 has thus a good view of the first 112 and second receptacle 115. The first receptacle 111 is telescopically mounted on the vehicle 110 such that it is extended when it is located at the front of the vehicle 110. The transmitting conveyor 112 is positioned at the bottom of the first receptacle 111.

Next the delivering conveyor 101 of the harvesting machine 100 is placed above the first receptacle 111 such that crops 102 are received from the harvesting machine 100. Since the first receptacle 111 is telescopically mounted on the vehicle 110 the height between the transmitting conveyor 111 and upper surface of the transmitting conveyor 112 is adapted depending on the type of crops that are harvested. This height correspond to the drop height of the harvested crops. Since a high drop height of crops may damages these crops it is important to limit this drop height. For example if potatoes are harvested the drop height is preferably reduced to lower than 40cm.

Additionally a proximity sensor 310 is installed at the front of the driver's cabin 310. In this way the distance between the delivering conveyor 101 and the driver's cabin 200 is monitored by emitting for example electromagnetic or sound waves. This is beneficially since the vehicle 110 is driving along the harvesting machine 100 and thus if there is a speed difference between the two the distance between the driver's cabin 200 and the delivering conveyor 101 varies as well. This way any damage to the driver's cabin 200 is avoided.

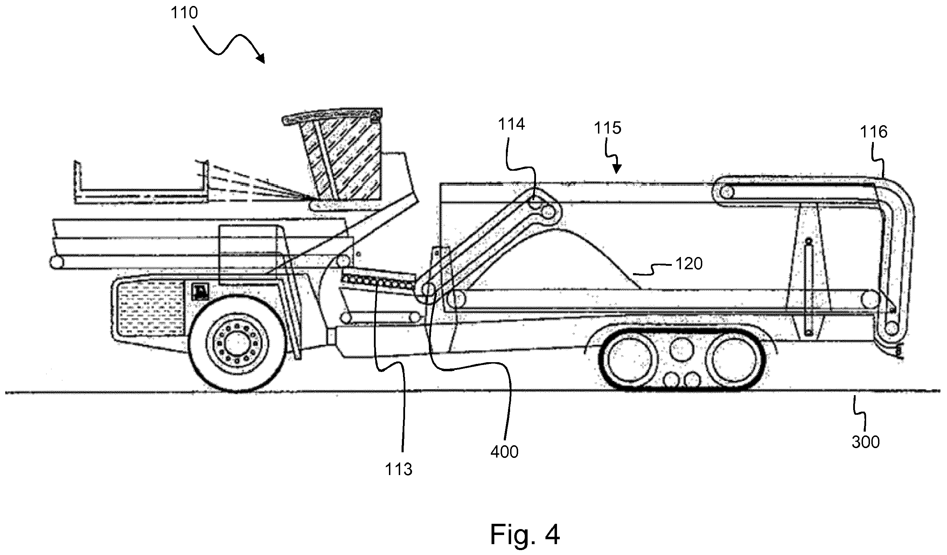

In the cleaning device 113 the received crops 102 are separated into excess materials 121 and cleaned crops 120. The excess materials 121 are scattered on the agricultural field 300 while the cleaned crops 102 are conveyed to the second receptacle 114. Fig. 4 illustrates cleaned crops 102 in the second receptacle 115. The distribution conveyor 114 is pivotally mounted on the hinge 400 and further telescopically mounted as well. In this way the cleaned crops 120 are uniformly distributed in the second receptacle 115.

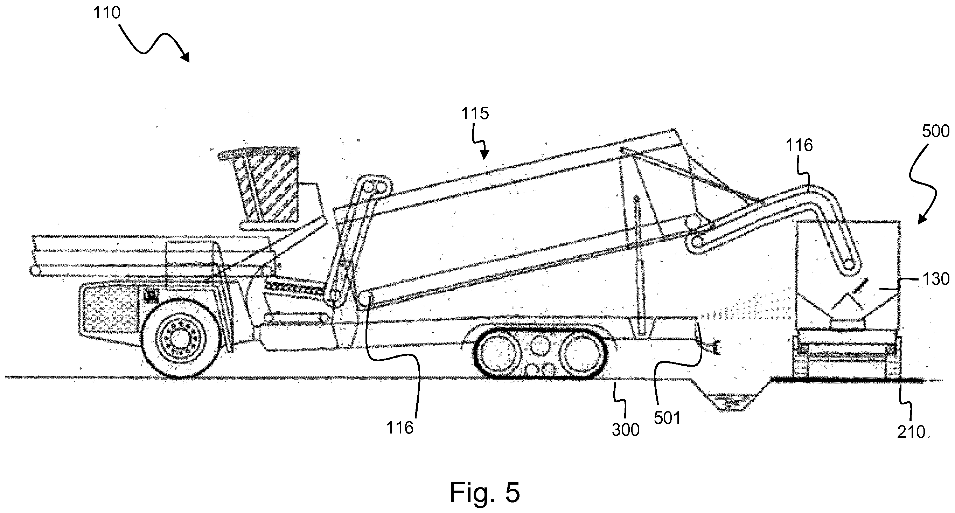

When the second receptacle 115 is partly or fully loaded with cleaned crops 120 they are unloaded in for example a container. Fig. 5 illustrates such an unloading operation. The container 101 is integrated in an external truck 500 which is located on the public road 210. The vehicle is still standing on the agricultural field 300. By the use of the discharging conveyor 116 which may also be installed in the second receptacle 115 the cleaned crops 120 are transferred to the truck 500 in particular to its container 101 and after this operation the vehicle 110 drives back to the harvesting machine 100.

Additionally a proximity sensor 501 is installed at the back of the vehicle 110. In this way the distance between the vehicle 110 and the truck 500 is monitored by emitting for example electromagnetic or sound waves. This is beneficially since the vehicle 110 drives backwards to the truck 500 and the sensor 501 indicates the required distance between the vehicle 110 and the truck 500. This way any damage to the vehicle 500, in particular the discharging conveyor 116, and/or the truck 500 is avoided.

According to an embodiment, the vehicle 110 further comprises a shovel unit 600. The shovel unit 600 is mounted in front of the vehicle 110. Crops 102 dropped at a dumping location, for example on a field or in a silo, are shovelled by the shovel unit 600 and the shovel unit 600 drops the crops in the first receptacle 111. Next, the crops are transmitted to the cleaning device 113 and the cleaning operation is performed in the same way as when the crops are received by a delivering conveyor 101 of a harvesting machine 100. The shovel unit 600 comprises, for example, a telescopic handler and a transporting conveyor. By use of the telescopic handler, crops located at a distance of the vehicle 110 may be shovelled as well, which increases the efficiency and flexibility of the vehicle 110.

According to an aspect of the invention, the first receptacle 111 may also be replaced by the shovel unit 600. This way, the shovelled crops are immediately transmitted to the cleaning device 113 such that the cleaning process is initiated in a faster way. Another advantage is that the vehicle is lighter.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

**1.** A vehicle (110) suitable for driving on a public road (210) and on an agricultural field (300), and further suitable for operating next to a harvesting machine (100), the vehicle (110) comprising:
- a first receptacle (111) suitable to receive crops (102) delivered by the harvesting machine (100) through a delivering conveyor (101) of the harvesting machine (100) while the vehicle (110) is driving alongside the harvesting machine (100) during a harvesting operation; and
- a cleaning device (113) adapted to:
- receive the received crops (102) of the first receptacle (111); and
- automatically separate the received crops (102) in excess materials (121) and cleaned crops (120);
**CHARACTERIZED IN THAT**
the vehicle (110) is operated such that the excess materials (121) of the cleaning device (113) are scattered on the agricultural field (300) while the vehicle (110) is driving along the agricultural field (300), and **in that** the vehicle (110) further comprises:
- a second receptacle (115) adapted to buffer the cleaned crops (120) of the cleaning device (113).

**2.** The vehicle (110) according to claim 1, wherein the vehicle (110) is further configured to scatter the excess materials (121) while the vehicle (110) is driving along the agricultural field (300) next to the harvesting machine (100) during a harvesting operation.

**3.** The vehicle (110) according to claim 1, wherein the vehicle (110) is further configured to scatter the excess materials (102) while the vehicle is travelling on the agricultural field (300) from the harvesting machine (100) towards a stationary dumping location.

**4.** The vehicle (110) according to claim 1, wherein the vehicle (110) is further configured to scatter the excess materials (121) while the vehicle (110) is travelling on the agricultural field (300) from a stationary dumping location towards the harvesting machine (100).

**5.** The vehicle (110) according to claim 1, wherein the vehicle (110) is further configured to buffer the excess materials (121) when the vehicle (110) is stationary at a stationary dumping location during a dumping operation.

**6.** The vehicle (110) according to any one of the preceding claims, the vehicle (110) further comprising:
- a distribution conveyor (114) pivotally and/or telescopically mounted such that the cleaned crops (120) received from the cleaning device (113) may be uniformly distributed in the second receptacle (115); and/or
- a discharging conveyor (116) adapted to convey the cleaned crops (120) from the second receptacle (115) to a storage and/or transport receptacle (130).

**7.** The vehicle (110) according to any one of the preceding claims, wherein the cleaning device (113) is further configured:
- to extract stones from the excess materials (121); and/or
- to extract ferromagnetic materials from the excess materials (121);

**8.** The vehicle (110) according to any one of the preceding claims, the vehicle (110) further comprising:
- a transmitting conveyor (112) configured to transmit the received crops (102) from the first receptacle (111) to the cleaning device (113); and
- a driver's cabin (200) movable mounted on one or two arms (201) such that the driver's cabin (200) may be lifted; and
- wherein the first receptacle (111) is mounted on the transmitting conveyor (112); and
- wherein the transmitting conveyor (112) is movable mounted on the vehicle (110) such that it may be moved under or along the driver's cabin (200) when the driver's cabin (200) is lifted.

**9.** The vehicle (110) according to any one of the preceding claims, the vehicle further (110) comprising a shovel unit (600) suitable to shovel crops, wherein the shovel unit (600) is configured to transmit the shovelled crops to the first receptacle (111).

**10.** The vehicle (110) according to any one of the preceding claims, wherein the weight handling capacity of the first receptacle (111) relative to the weight handling capacity of the second receptacle (115) is in the range of 10% to 35%, preferably 15% to 25%, more preferably 20%.

**10.** The vehicle (110) according to any one of the preceding claims, wherein the width of the vehicle (110) is in the range of approximately 2m to 3m, more preferably in the range of 2.3m and 2.5m, most preferably approximately 2.4m, and wherein the length of the vehicle is approximately 15m.

**11.** Method for operating the vehicle according to any one of the preceding claims, wherein the method comprises the steps of:
- receiving crops from a harvesting machine while driving alongside the harvesting machine during a harvesting operation on an agricultural field; and
- separating the received crops in excess materials and cleaned crops;
**CHARACTERIZED IN THAT**
the excess materials are scattered on the agricultural field while driving along the agricultural field and the cleaned crops are buffered.

**12.** Method according to claim 11, wherein the excess materials are scattered while driving along the agricultural field next to the harvesting machine during a harvesting operation.

**13.** Method according to claim 11, wherein the excess materials are scattered while travelling on the agricultural field from the harvesting machine towards a stationary dumping location.

**14.** Method according to claim 11, wherein the excess materials are scattered while travelling on the agricultural field from a stationary dumping location towards the harvesting machine.

**15.** Method according to claim 11, wherein the excess materials are buffered when being stationary at a stationary dumping location.
